# FASCICULE DE BREVET EUROPEEN

(11) **EP 3 019 372 B1**
(45) Date de publication et mention de la délivrance du brevet: **29.05.2019**
(21) Numéro de dépôt: 14739704.6
(22) Date de dépôt: 25.06.2014
(51) Int. Cl.: B60R 25/23, G06F 21/36

(54) **PROCÉDÉ DE SÉCURISATION D'UNE COMMANDE À APPLIQUER À UN VÉHICULE AUTOMOBILE**
VERFAHREN ZUM ABSICHERN EINES STEUERBEFEHLS FÜR EIN KRAFTFAHRZEUG
METHOD FOR AUTHENTIFYING A COMMAND FOR A MOTOR VEHICLE

(30) Priorité: 12.07.2013 FR 1301653
(43) Date de publication de la demande: 18.05.2016
(73) Titulaire: Valeo Comfort and Driving Assistance, 94046 Créteil Cedex (FR)
(72) Inventeur: MENARD, Eric, F-94046 Créteil Cedex (FR); GEHIN, Frédéric, F-94046 Creteil Cedex (FR); MASSON, Fabienne, F-94046 Créteil Cedex (FR)
(74) Mandataire: Pothmann, Karsten
(86) Numéro de dépôt international: PCT/EP2014/063457
(87) Numéro de publication internationale: WO 2015/003909

(56) Documents cités:
- EP-A1- 0 677 801
- EP-A1- 2 216 970
- CN-A- 101 607 548
- DE-A1- 10 237 831
- FR-A1- 2 819 067
- GB-A- 2 433 147
- US-A1- 2009 038 006
- US-B1- 7 589 434

## Description

### DOMAINE TECHNIQUE DE L'INVENTION

Le domaine technique de l'invention est celui des véhicules automobiles.

La présente invention concerne un procédé de sécurisation d'une commande à appliquer à un véhicule automobile.

### ARRIERE-PLAN TECHNOLOGIQUE DE L'INVENTION

Dans le cadre d'une commande d'un véhicule automobile, et en particulier dans le cadre d'une commande à distance, ou d'une télécommande, d'un véhicule automobile, on souhaite s'assurer que ladite commande ou télécommande est bien effectuée par un utilisateur humain, voire par un utilisateur humain responsable dudit véhicule automobile (cf US20090038006A).

Afin d'appliquer une commande à distance à un véhicule, l'art antérieur fait notamment état d'un recours à un appui maintenu, de la part de l'utilisateur, sur un bouton de commande d'une clé, également appelée « identifiant », du véhicule. L'appui long génère un signal (par exemple un signal radiofréquence RF) particulier. Lorsque le véhicule reçoit le signal particulier, il exécute la commande. Une telle technique permet de diminuer le risque de mauvaise manipulation de la part de l'utilisateur. Cependant, cette technique de recours à un appui maintenu n'est pas sécurisée contre un potentiel piratage par une intelligence artificielle, ou contre une utilisation malveillante, par exemple d'un voleur, ou inappropriée, par exemple d'un enfant. En effet, pour que le véhicule reçoive le signal particulier, il faut reproduire le comportement de la clé, c'est-à-dire reproduire le signal particulier et le protocole de communication. Ceci peut être réalisé en espionnant les communications entre la clé et le véhicule. En outre, un utilisateur en possession de la clé peut commander le véhicule, indépendamment de son âge par exemple.

### DESCRIPTION GENERALE DE L'INVENTION

L'invention vise à offrir une solution aux problèmes évoqués précédemment, en proposant un procédé de sécurisation d'une commande à appliquer à un véhicule automobile permettant notamment de se prémunir d'un piratage informatique. Elle permet dans un mode de mise en oeuvre avantageux de se prémunir contre une utilisation inappropriée du véhicule, par exemple par un usager irresponsable. L'invention concerne ainsi essentiellement un procédé de sécurisation d'une commande à appliquer à un véhicule selon la revendication 1.

Le procédé de sécurisation d'une commande à appliquer à un véhicule selon l'invention permet notamment de se prémunir d'un piratage informatique, en mettant en oeuvre la quatrième étape de traitement des premières données par l'utilisateur humain, et en conditionnant la réalisation de ladite commande à la validation, par l'unité de commande électronique présumée sécurisée, du résultat de ladite quatrième étape de traitement de données. En effet, une intelligence artificielle, par exemple d'un programme informatique, ne pourra pas effectuer correctement ou ne pourra pas effectuer du tout le traitement des premières données. Dans ce cas, la septième étape d'activation du véhicule automobile ne pourra donc pas avoir lieu.

Outre les caractéristiques qui viennent d'être évoquées dans le paragraphe précédent, le procédé de sécurisation selon l'invention peut présenter une ou plusieurs caractéristiques complémentaires parmi les suivantes, considérées individuellement ou selon toutes les combinaisons techniquement possibles :
- Les premières données comportent un test d'authentification d'un utilisateur humain. Ainsi, seul un utilisateur humain est capable d'effectuer correctement ledit test d'authentification d'un utilisateur humain, et donc seul un utilisateur humain est capable de traiter les premières données de manière à obtenir des deuxièmes données qui seront validées par l'unité de commande électronique à l'aide de la clé des premières données. On discrimine donc avantageusement une intelligence artificielle d'une intelligence d'un utilisateur humain.
- Le procédé de sécurisation comporte une étape préliminaire d'envoi, par le terminal mobile, d'une requête relative à la commande vers l'unité de commande électronique du véhicule automobile. Ainsi, l'utilisateur peut volontairement demander, par l'intermédiaire du terminal mobile, par exemple avec une application dudit terminal mobile, une commande à appliquer au véhicule automobile. Alternativement, le terminal mobile peut aussi demander spontanément une commande à appliquer au véhicule automobile, par exemple lorsqu'une condition de proximité du véhicule, de date, de lieu ou de température est remplie, ou lorsque le terminal mobile a été spécifiquement programmé dans cette optique.
- Le procédé de sécurisation comporte une étape préliminaire alternative d'envoi, par un identifiant du véhicule, d'une requête relative à la commande vers l'unité de commande électronique du véhicule automobile. Ainsi, l'utilisateur peut volontairement demander, par l'intermédiaire de l'identifiant, par exemple en appuyant sur une touche dudit identifiant, une commande à appliquer au véhicule automobile. Alternativement, l'identifiant peut aussi demander spontanément une commande à appliquer au véhicule automobile, par exemple lorsqu'une condition de proximité de véhicule est remplie.

- Le procédé de sécurisation comporte une étape préalable de réalisation d'une action par l'utilisateur humain sur le véhicule. Ainsi, l'utilisateur peut demander une commande à appliquer au véhicule automobile, par exemple en appuyant sur une poignée d'une portière, en appuyant sur une pédale ou en tournant le volant dudit véhicule automobile. L'accès à des fonctions « risquées » telles le démarrage du moteur et/ou le déplacement du véhicule peuvent ainsi être avantageusement sécurisées, notamment vis-à-vis d'un enfant. Dans le même temps, on peut par exemple autoriser une fonction « non risquée », telle que l'accès à l'intérieur dudit véhicule, à ce même enfant. L'invention permet donc avantageusement de distinguer différents niveaux de sécurisation pour différentes commandes du véhicule automobile, en fonction du degré de risque que présentent potentiellement ces différentes commandes.
- L'envoi, par l'unité de commande électronique, des premières données vers le terminal mobile est un envoi sécurisé par l'intermédiaire d'un réseau privé virtuel ; et l'envoi, par le terminal mobile, des deuxièmes données vers l'unité de commande électronique est un envoi sécurisé par l'intermédiaire du réseau privé virtuel. Ainsi, on améliore avantageusement la robustesse du procédé de sécurisation de l'invention.
- Les première, deuxième, troisième, quatrième, cinquième, sixième et septième étapes sont répétées au cours de la réalisation de la commande, jusqu'à la réalisation complète de la commande. Ainsi, on permet avantageusement que le procédé de sécurisation soit mis en oeuvre plusieurs fois au cours de la réalisation d'une seule commande, par exemple au cours de la réalisation d'une commande susceptible de durer. On s'assure ainsi avantageusement que l'utilisateur continue d'approuver la commande et donc d'assumer la responsabilité de ladite commande au cours du temps. Au cours de la réalisation d'une commande, en l'absence de réponse, ou en l'absence de réponse correcte, de la part de l'utilisateur au test d'authentification, la réalisation de la commande est alors interrompue par défaut.
- La clé des premières données est générée par l'unité de commande électronique lors de la première étape.
- La clé des premières données est stockée dans une mémoire de l'unité de commande électronique préalablement à la réalisation de la première étape.
- L'écran est un écran tactile ; un code confidentiel prédéfini de symboles est mémorisé dans l'unité de commande électronique du véhicule automobile ; la troisième étape est une étape d'affichage sur l'écran tactile d'une matrice de symboles ; et lors de la quatrième étape, l'utilisateur compose le code confidentiel sur l'écran tactile et le terminal mobile enregistre les coordonnées des positions touchées par l'utilisateur. Ainsi, le code confidentiel demeure avantageusement inconnu du terminal mobile. Le terminal mobile connaît uniquement des données relatives à des positions touchées par l'utilisateur, et ces positions sont susceptibles de changer à chaque mise en oeuvre alors que le code confidentiel reste inchangé.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1a illustre une étape préliminaire d'un procédé de sécurisation d'une commande à appliquer à un véhicule automobile selon l'invention.
- La figure 1b illustre une étape préliminaire alternative du procédé de sécurisation d'une commande à appliquer à un véhicule automobile selon l'invention.
- La figure 2 illustre une première étape et une deuxième étape du procédé de sécurisation selon un mode de réalisation de l'invention.
- La figure 3 illustre une troisième étape et une quatrième étape du procédé de sécurisation selon un mode de l'invention.
- La figure 4 illustre une cinquième étape et une sixième étape du procédé de sécurisation selon un mode de l'invention.
- La figure 5a montre un exemple d'affichage possible d'un test de type « suivi point à point complexe » sur un écran d'un terminal mobile.
- La figure 5b montre un exemple d'affichage possible d'un test de type « suivi point à point simple » sur un écran d'un terminal mobile.
- La figure 5c montre un exemple d'affichage possible d'un test de type « interprétation d'image » sur un écran d'un terminal mobile.
- La figure 6 montre un exemple d'affichage possible d'un test de type « code confidentiel » sur un écran d'un terminal mobile.

### DESCRIPTION DETAILLEE D'AU MOINS UN MODE DE REALISATION DE L'INVENTION

Sauf précision contraire, un même élément apparaissant sur des figures différentes présente une référence unique.

L'invention concerne un procédé 100 de sécurisation d'une commande de déplacement du véhicule V entre une position initiale et une position finale.

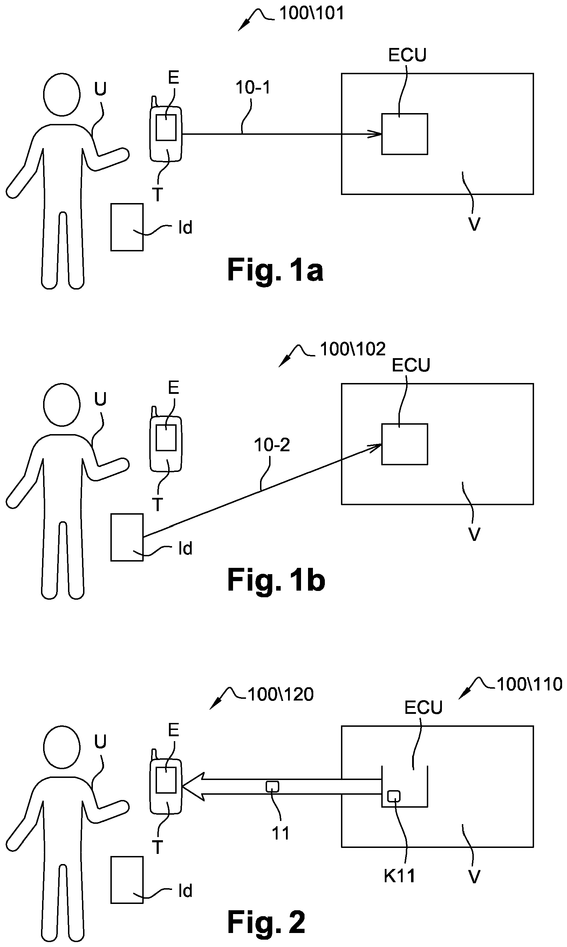

Les figures 1a, 2, 3 et 4 illustrent des étapes du procédé 100 selon un premier mode de fonctionnement. Les figures 1a, 2, 3 et 4 sont décrites conjointement.

La **figure 1a** illustre une étape préliminaire 101 du procédé 100 de sécurisation d'une commande appliquée au véhicule automobile V, selon un premier mode de fonctionnement de l'invention.

La figure 1a montre :
- un utilisateur humain U ;
- le véhicule automobile V comportant une unité de commande électronique ECU ;
- un identifiant Id du véhicule automobile V, l'identifiant Id pouvant être par exemple une clé, une carte ou un badge magnétique ;
- un terminal mobile T comportant un écran E.

Lors de l'étape préliminaire 101 selon le premier mode de fonctionnement de l'invention, le terminal mobile envoie une requête 10-1, relative à la commande à appliquer au véhicule automobile V, vers l'unité de commande électronique ECU du véhicule automobile V.

L'étape préliminaire 101 peut être déclenchée par l'utilisateur U qui agit sur le terminal mobile T, par exemple en démarrant et en utilisant une application dudit terminal mobile T.

La **figure 2** illustre une première étape 110 et une deuxième étape 120 du procédé 100 de sécurisation selon le premier mode de l'invention.

Selon le premier mode de fonctionnement de l'invention, suite à l'étape préliminaire 101, l'unité de commande électronique ECU génère lors de la première étape 110 :
- des premières données 11 comportant un test d'authentification d'un utilisateur humain ;
- une clé K11 des premières données 11.

Le test d'authentification d'un utilisateur humain permet notamment de discriminer automatiquement un utilisateur humain d'une machine, susceptible d'être piratée informatiquement, telle qu'un ordinateur ou tout autre dispositif ayant une intelligence artificielle. Le test d'authentification a donc pour but de s'assurer qu'un utilisateur humain, tel que l'utilisateur U, valide la commande à appliquer au véhicule mobile V et assume la responsabilité de ladite commande. L'utilisateur humain peut avoir lui-même demandé ladite commande, ou bien ladite commande peut lui avoir été proposée le terminal mobile T.

Lors de la deuxième étape 120, les premières données 11 sont ensuite envoyées par l'unité de commande électronique ECU vers le terminal mobile T. L'envoi par l'unité de commande électronique ECU des premières données 11 vers le terminal mobile T est avantageusement un envoi sécurisé, par exemple par l'intermédiaire d'un réseau privé virtuel VPN (« virtual private network » en langue anglaise).

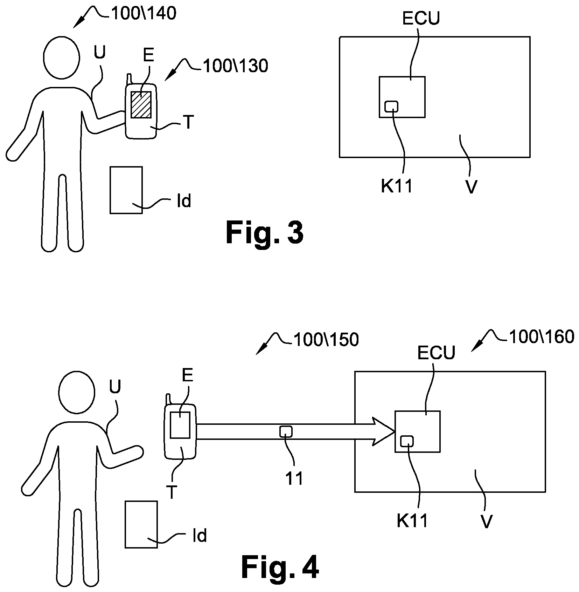

La **figure 3** illustre une troisième étape 130 et une quatrième étape 140 du procédé 100 de sécurisation selon le premier mode de l'invention.

Lors de la troisième étape 130, les premières données provoquent l'affichage du test d'authentification d'un utilisateur humain sur l'écran E du terminal mobile T.

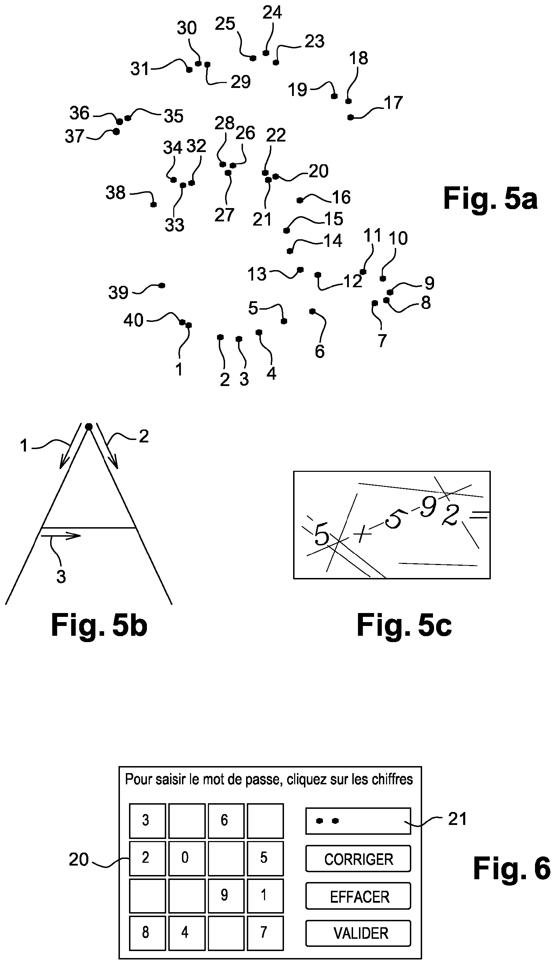

Par simplification de langage, on considère que les premières données sont affichées sur le terminal T. Le test d'authentification d'un utilisateur humain peut être de différents types :
- Il peut s'agir d'un test de type « suivi point à point complexe », comme illustré à la figure 5a. Pour la mise en oeuvre d'un tel type de test, l'écran E est un écran tactile.
- Il peut également s'agir d'un test de type « suivi point à point simple », comme illustré à la figure 5b. Pour la mise en oeuvre d'un tel type de test, l'écran E est un écran tactile.
- Il peut aussi s'agir d'un test de type « interprétation d'image », comme illustré à la figure 5c.

Lors de la quatrième étape 140, l'utilisateur U effectue un traitement des premières données 11, en réalisant le test d'authentification d'un utilisateur humain. Le traitement des premières données 11 par l'utilisateur humain U entraîne l'obtention de deuxièmes données 12.

La **figure 5a** montre un exemple d'affichage possible d'un test de type « suivi point à point complexe » sur l'écran E tactile du terminal mobile T. La figure 5a montre une pluralité de points numérotés, en l'occurrence quarante points numérotés de 1 à 40, qui constituent des indications de tracé. Le test d'authentification d'un utilisateur humain consiste alors à relier, par exemple avec un doigt ou à l'aide d'un stylet, tous les points dans l'ordre indiqué. Le terminal mobile T enregistre les coordonnées du tracé effectué par l'utilisateur humain U. Dans cet exemple, les deuxièmes données 12 comportent donc les coordonnées du tracé effectué par l'utilisateur humain U.

La **figure 5b** montre un exemple d'affichage possible d'un test de type « suivi point à point simple » sur l'écran E tactile du terminal mobile T. La figure 5b montre une forme géométrique simple formée d'une pluralité de segments, en l'occurrence la lettre « A ». La figure 5b montre également trois flèches numérotées, qui constituent des indications de tracé. Le test d'authentification d'un utilisateur humain consiste alors à reproduire ladite forme géométrique en suivant lesdits segments, par exemple avec un doigt ou à l'aide d'un stylet, dans l'ordre et dans le sens indiqués par les flèches numérotées. Le terminal mobile T enregistre les coordonnées du tracé effectué par l'utilisateur humain U. Dans cet exemple, les deuxièmes données 12 comportent donc les coordonnées du tracé effectué par l'utilisateur humain U.

La **figure 5c** montre un exemple d'affichage possible d'un test de type « interprétation d'image » sur l'écran E du terminal mobile T. Dans le cadre de ce type de test, l'écran E peut indifféremment être tactile ou ne pas être tactile. La figure 5c est une image représentant, sur un fond non-uni, une opération d'addition comportant différents symboles déformés - un chiffre «5», un symbole d'addition «+», un nombre «592» et un symbole d'égalité «=». Le test d'authentification d'un utilisateur humain consiste alors à lire l'opération et à réaliser le calcul demandé, puis à donner le résultat du calcul, en l'occurrence « 597 ». Pour ce faire, l'utilisateur humain U peut par exemple utiliser un clavier du terminal mobile T pour taper la réponse, ou sélectionner une réponse parmi plusieurs réponses proposées par le terminal mobile T. Dans cet exemple, les deuxièmes données 12 comportent donc le résultat «597» de l'opération représentée sur l'image de la figure 5c.

Alternativement, l'image affichée dans un test de type « interprétation d'image » peut représenter une combinaison de symboles déformés et le test d'authentification d'un utilisateur humain peut consister à lire la combinaison et à la reproduire, soit en entrant les différents symboles de la combinaison sur un clavier du terminal mobile T, soit en sélectionnant une réponse parmi plusieurs réponses proposées par le terminal mobile T.

Les différents exemples de tests d'authentification d'un utilisateur humain décrits ci-dessus permettent de discriminer une intelligence d'un utilisateur humain, d'une intelligence artificielle.

La **figure 4** illustre une cinquième étape 150 et une sixième étape 160 du procédé 100 de sécurisation selon le premier mode de l'invention.

Lors de la cinquième étape 150, le terminal mobile T envoie les deuxièmes données 12 vers l'unité de commande électronique ECU. L'envoi de ces deuxièmes données 12 se fait avantageusement de manière sécurisée, par exemple par l'intermédiaire d'un réseau privé virtuel VPN.

Lors de la sixième étape 160, o, procède à une opération de comparaison au cours de laquelle l'unité de commande électronique ECU évalue les deuxièmes données 12 en fonction de la clé K11 des premières données 11. A l'issue de la sixième étape 160, les deuxièmes données 12 sont donc validées ou invalidées. Les deuxièmes données 12 peuvent par exemple être invalidées si, dans l'exemple d'un test de type « suivi point à point complexe « ou « suivi point à point simple », un tracé inexact ou trop imprécis a été réalisé, ou si, dans l'exemple d'un test de type « interprétation d'image », un calcul ou une reproduction de combinaison erronés ont été réalisés.

Si les deuxièmes données 12 sont invalidées par l'unité de commande électronique ECU, la commande à appliquer au véhicule automobile V n'est pas réalisée.

Si les deuxièmes données 12 sont validées par l'unité de commande électronique ECU, l'unité de commande électronique ECU active, lors d'une septième étape (non référencée), le véhicule automobile pour la réalisation d'au moins une partie de la commande.

Un deuxième procédé diffère du premier mode de fonctionnement de l'invention en ce que :
- les premières données 11 comportent un test d'authentification d'un utilisateur humain habilité à commander le véhicule automobile V ;
- la clé K11 des premières données 11 se trouve dans une mémoire (non représentée) de l'unité de commande électronique ECU.

Le test d'authentification d'un utilisateur humain habilité à commander le véhicule a pour objectif d'ajouter un degré supplémentaire de sécurité par rapport au test d'authentification d'un utilisateur humain utilisé dans le premier mode de fonctionnement de l'invention. Le test d'authentification d'un utilisateur humain habilité à commander le véhicule V a en effet pour rôle de discriminer non seulement une intelligence d'un utilisateur humain par rapport à une intelligence artificielle, mais également de discriminer un utilisateur humain habilité à commander le véhicule V, comme par exemple le propriétaire du véhicule V, par rapport à un utilisateur humain non habilité à commander le véhicule V, comme par exemple un jeune enfant ou une personne ayant des intentions malveillantes. Contrairement au test d'un utilisateur humain, la réponse ou la solution au test d'un utilisateur humain habilité n'est pas contenue dans le test en lui-même : le test d'un utilisateur humain habilité ne donne aucun indice sur le code confidentiel.

Le premier mode de fonctionnement de l'invention sera préférentiellement mis en oeuvre pour des commandes de type « non risqué », comme :
- une commande de verrouillage ou de déverrouillage du véhicule V ;
- une commande de déclenchement ou d'arrêt du chauffage ou de la climatisation du véhicule V.

Le test d'authentification d'un utilisateur humain à commander le véhicule automobile V peut par exemple être un test de type « code confidentiel ». Pour la mise en oeuvre d'un tel type de test, l'écran E est un écran tactile.

Un code confidentiel est défini préalablement à la mise en oeuvre du procédé de sécurisation 100, par exemple chez un concessionnaire du véhicule automobile V. Le code confidentiel est par exemple une combinaison de chiffres, une combinaison de lettres ou une combinaison de chiffres et de lettres. Parmi tous les utilisateurs humains potentiels du véhicule automobile V, le code confidentiel est réputé connu uniquement d'un utilisateur humain habilité du véhicule automobile V, comme par exemple le propriétaire du véhicule automobile V. Le code confidentiel est stocké dans une mémoire de l'unité de contrôle électronique ECU, réputée sécurisée.

La **figure 6** montre un exemple d'affichage possible d'un test de type « code confidentiel » sur l'écran E tactile du terminal mobile T. Dans le cas illustré à la figure 6, le code confidentiel est une combinaison de chiffres. La figure 6 montre une matrice 20 qui comporte seize cases. Chaque chiffre, de « 0 » à « 9 », apparaît une seule et unique fois dans la matrice 20. Dix cases de la matrice 20 sont ainsi occupées, chacune par un chiffre différent. Les six cases restantes sont vides. Le positionnement des chiffres au sein de la matrice 20 est avantageusement aléatoire. L'utilisateur humain habilité saisit le code confidentiel en appuyant successivement sur les cases adéquates de la matrice 20. Avantageusement, la saisie de chaque chiffre du code confidentiel est matérialisée par l'apparition d'un signe neutre, tel qu'un point, dans un cadre 21. Ainsi l'utilisateur habilité sait lorsqu'une saisie d'un chiffre est effective, c'est-à-dire lorsqu'une saisie d'un chiffre a été prise en compte par le terminal mobile T. Le terminal mobile T enregistre la position de chaque appui. Dans cet exemple, les deuxièmes données 12 comportent donc la position des appuis successifs effectués par l'utilisateur humain habilité sur la matrice 20 affichée sur l'écran E tactile.

Une première variante est à présent décrite. Selon cette première variante, le procédé 100 de sécurisation est itéré, c'est-à-dire que, pour une commande à appliquer au véhicule automobile V, les première, deuxième, troisième, quatrième, cinquième, sixième et septième étapes 110 à 170 sont répétées séquentiellement. Cette première variante est avantageusement mise en oeuvre dans le cas d'une commande relative à une action susceptible de durer, comme par exemple :
- une commande de déplacement du véhicule V entre une position initiale et une position finale ;
- une commande de déclenchement ou d'arrêt du chauffage ou de la climatisation du véhicule V.

Les première, deuxième, troisième, quatrième, cinquième, sixième et septième étapes 110 à 170 peuvent par exemple être répétées périodiquement. Ainsi, dans le cas d'une commande de déclenchement de la climatisation, le procédé 100 de sécurisation peut être mis en oeuvre périodiquement, par exemple toutes les vingt minutes. L'utilisateur effectue le test d'authentification pour poursuivre la réalisation de la commande. Si le test d'authentification n'est pas réalisé dans un certain délai ou s'il n'est pas validé, la commande est interrompue, c'est-à-dire que, dans notre exemple, la climatisation est arrêtée.

Les première, deuxième, troisième, quatrième, cinquième, sixième et septième étapes 110 à 170 peuvent également être répétées à plusieurs moments dits « stratégiques » au cours de la réalisation d'une commande. On considère le cas d'une commande de déplacement du véhicule V entre une position initiale et une position finale, le déplacement comportant une marche avant puis une marche arrière. Le procédé 100 de sécurisation peut par exemple être mis en oeuvre :
- une première fois avant exécution de la marche avant ;
- une deuxième fois avant exécution de la marche arrière.

Dans la cadre particulier d'une manoeuvre de parking, les première, deuxième, troisième, quatrième, cinquième, sixième et septième étapes 110 à 170 peuvent également être répétées de manière périodique tout au long de la manoeuvre. Les périodes généralement choisies pour ce type de manoeuvre sont courtes de l'ordre de 30ms par exemple. Ceci permet de vérifier en permanence la présence et la volonté de l'utilisateur et donc sa responsabilité.

Un test d'authentification pertinent pour une manoeuvre de parking peut être similaire à celui illustré dans la figure 5b, c'est-a-dire un test de type « suivi point à point simple ».

Dans un mode de réalisation alternatif non illustré, la forme géométrique formée sur l'écran peut être un cercle avec une flèche indiquant un sens de déplacement. Ainsi tout au long de la manoeuvre l'utilisateur effectue sur l'écran un mouvement circulaire avec son doigt pour suivre le contour du cercle dans le sens indiqué par la flèche.

Les tests d'authentification peuvent être considérés comme ratés par l'ECU si l'utilisateur ne fait pas le bon geste ou si la communication desdites deuxièmes données n'aboutit pas.

De manière avantageuse, Il est possible de tolérer côté ECU un certain nombre de test d'authentification ratés avant de stopper la commande en cours. La durée maximale de tests d'authentification ratés successifs autorisés doit néanmoins rester limitée pour ne pas entrainer un déplacement du véhicule non souhaité sur une distance trop importante.

De manière avantageuse on se limitera par exemple à 5 tests d'authentification ratés soit donc une durée de 150ms qui correspond à un déplacement du véhicule d'une dizaine de centimètre.

D'un autre côté si le nombre de test d'authentification ratés est plus faible, l'utilisateur observerait un déplacement par à-coups.

Dans le cas d'une communication radio, cela permet notamment de tolérer quelques échecs de communication avant d'arrêter la manoeuvre en cours et donc d'améliorer la disponibilité de la fonction du point de vue utilisateur.

De plus, il est possible de reprendre la manoeuvre interrompue dès que les test d'authentification redeviennent valides. Cela est notamment bien perçu et donc attendu par l'utilisateur dans le cas d'une manoeuvre de parking.

A contrario, pour certaines commandes telles que la climatisation, un test d'authentification raté arrête la commande en cours et celle-ci ne sera pas reprise même si le test d'authentification périodique redevenait valide, il faudra à l'utilisateur reprendre la commande depuis le début avec un test de première authentification.

Une deuxième variante est à présent décrite. Selon cette deuxième variante, l'étape préliminaire 101 est remplacée par une étape préliminaire alternative 102. La figure 1b montre une représentation schématique de l'étape préliminaire 102 du procédé 100 de sécurisation d'une commande appliquée au véhicule automobile V, selon la deuxième variante. Lors de l'étape préliminaire alternative 102, l'identifiant Id du véhicule automobile V envoie une requête 10-1, relative à la commande à appliquer au véhicule automobile V, vers l'unité de commande électronique ECU du véhicule automobile V.

L'étape préliminaire alternative 102 peut par exemple être déclenchée :
- par l'utilisateur U, qui agit sur l'identifiant Id par exemple en appuyant sur une touche de l'identifiant Id ;
- par l'identifiant Id, qui est par exemple programmé pour déclencher l'étape préliminaire 102 lorsqu'il détecte la proximité du véhicule V.

La deuxième variante est compatible de la première variante, c'est-à-dire que suite à l'étape préliminaire alternative 102 de la deuxième variante, les première, deuxième, troisième, quatrième, cinquième, sixième et septième étapes 110 à 170 peuvent être itérées.

Une troisième variante est à présent décrite. Selon cette troisième variante, l'étape préliminaire 101 est remplacée par une étape préalable au cours de laquelle l'utilisateur U effectue une action sur le véhicule automobile V, comme par exemple : appuyer sur une poignée de porte, appuyer sur un frein, tourner le volant.

La troisième variante est compatible de la première variante, c'est-à-dire que suite à l'étape préalable de la troisième variante, les première, deuxième, troisième, quatrième, cinquième, sixième et septième étapes 110 à 170 peuvent être itérées.

## Revendications

1. Procédé (100) de sécurisation d'une commande à appliquer à un véhicule automobile (V), de déplacement entre une position initiale et une position finale, procédé qui comporte :
- une première étape (110) de génération, par une unité de commande électronique (ECU) du véhicule automobile (V), de premières données (11) ;
- une deuxième étape (120) d'envoi, par l'unité de commande électronique (ECU), des premières données (11) vers un terminal mobile (T) comportant un écran (E) ;
- une troisième étape (130) d'affichage sur l'écran du terminal mobile (T), d'un test d'authentification d'un utilisateur humain (U) contenant en lui-même la réponse ou la solution, provoqué par les premières données (11) ;
- une quatrième étape (140) de réalisation du test d'authentification par l'utilisateur humain (U), pour obtenir des deuxièmes données (12) ;
- une cinquième étape (150) d'envoi, par le terminal mobile (T), des deuxièmes données (12) vers l'unité de commande électronique (ECU) ;
- une sixième étape (160) de comparaison, par l'unité de commande électronique (ECU), desdites deuxièmes données (12) avec une clé (K11) des premières données ;
- si les deuxièmes données (12) sont validées par la clé (K11) des premières données, une septième étape (170) d'activation, par l'unité de commande électronique (ECU), du véhicule automobile (V) pour la réalisation d'au moins une partie de la commande.

2. Procédé (100) selon la revendication 1 **caractérisé en ce qu'**il comporte une étape préliminaire (101) d'envoi, par le terminal mobile (T), d'une requête (10-1) relative à la commande vers l'unité de commande électronique (ECU) du véhicule automobile (V).

3. Procédé (100) selon la revendication 1 **caractérisé en ce qu'**il comporte une étape préliminaire alternative (102) d'envoi, par un identifiant (Id) du véhicule, d'une requête (10-2) relative à la commande vers l'unité de commande électronique (ECU) du véhicule automobile (V).

4. Procédé (100) selon l'une quelconque des revendications précédentes **caractérisé en ce qu'**il comporte une étape préalable de réalisation d'une action par l'utilisateur humain (U) sur le véhicule (V).

5. Procédé (100) selon l'une quelconque des revendications précédentes **caractérisé en ce que** :
- l'envoi, par l'unité de commande électronique (ECU), des premières données (11) vers le terminal mobile (T) est un envoi sécurisé par l'intermédiaire d'un réseau privé virtuel ;
- l'envoi, par le terminal mobile (T), des deuxièmes données (12) vers l'unité de commande électronique (ECU) est un envoi sécurisé par l'intermédiaire du réseau privé virtuel.

6. Procédé (100) selon l'une quelconque des revendications précédentes **caractérisé en ce que** les première, deuxième, troisième, quatrième, cinquième, sixième et septième étapes (110, 120, 130, 140, 150, 160, 170) sont répétées au cours de la réalisation de la commande, jusqu'à la réalisation complète de la commande.

7. Procédé (100) selon l'une quelconque des revendications précédentes **caractérisé en ce que** la clé (K11) des premières données (11) est générée par l'unité de commande électronique (ECU) lors de la première étape (110).

8. Procédé (100) selon l'une quelconque des revendications 1 à 6 **caractérisé en ce que** la clé (K11) des premières données (11) est stockée dans une mémoire de l'unité de commande électronique (ECU) préalablement à la réalisation de la première étape (110).

9. Procédé (100) selon l'une quelconque des revendications précédentes **caractérisé en ce que** :
- l'écran (E) est un écran tactile ;
- le test d'authentification consiste à reproduire le tracé d'une forme géométrique affichée sur l'écran (E) ;
- la réalisation du test d'authentification se fait par reproduction du tracé de ladite forme géométrique par l'utilisateur avec son doigt ou un stylet sur l'écran tactile.

## Patentansprüche

1. Verfahren (100) zum Absichern eines auf ein Kraftfahrzeug (V) anzuwendenden Befehls zum Bewegen zwischen einer Ausgangsposition und einer Endposition, das umfasst:
- einen ersten Schritt (110) des Erzeugens von ersten Daten (11) durch eine elektronische Steuereinheit (ECU) des Kraftfahrzeugs (V);
- einen zweiten Schritt (120) des Sendens der ersten Daten (11) durch die elektronische Steuereinheit (ECU) an ein mobiles Endgerät (T) mit einem Bildschirm (E);
- einen dritten Schritt (130) des Anzeigens eines Tests zur Authentifizierung eines menschlichen Benutzers (U) auf dem Bildschirm des mobilen Endgeräts (T), der selbst die Antwort oder Lösung enthält, ausgelöst durch die ersten Daten (11);
- einen vierten Schritt (140) der Ausführung des Authentifizierungstests durch den menschlichen Benutzer (U), um zweite Daten (12) zu erhalten;
- einen fünften Schritt (150) des Sendens der zweiten Daten (12) durch das mobile Endgerät (T) an die elektronische Steuereinheit (ECU);
- einen sechsten Schritt (160) des Vergleichens der zweiten Daten (12) mit einem Schlüssel (K11) der ersten Daten durch die elektronische Steuereinheit (ECU);
- wenn die zweiten Daten (12) durch den Schlüssel (K11) der ersten Daten validiert werden, einen siebten Schritt (170) des Aktivierens des Kraftfahrzeugs (V) durch die elektronische Steuereinheit (ECU) zur Ausführung mindestens eines Teils des Befehls.

2. Verfahren (100) nach Anspruch 1, **dadurch gekennzeichnet, dass** es einen vorbereitenden Schritt (101) des Sendens einer Anfrage (10-1) bezüglich des Befehls durch das mobile Endgerät (T) an die elektronische Steuereinheit (ECU) des Kraftfahrzeugs (V) umfasst.

3. Verfahren (100) nach Anspruch 1, **dadurch gekennzeichnet, dass** es einen alternativen vorbereitenden Schritt (102) des Sendens einer Anfrage (10-2) bezüglich des Befehls durch eine Kennung (Id) des Fahrzeugs an die elektronische Steuereinheit (ECU) des Kraftfahrzeugs (V) umfasst.

4. Verfahren (100) nach einem der vorhergehenden Ansprüche, **dadurch gekennzeichnet, dass** es einen vorherigen Schritt des Ausführens einer Handlung durch den menschlichen Benutzer (U) an dem Fahrzeug (V) umfasst.

5. Verfahren (100) nach einem der vorhergehenden Ansprüche, **dadurch gekennzeichnet, dass**:
- das Senden der ersten Daten (11) durch die elektronische Steuereinheit (ECU) an das mobile Endgerät (T) ein abgesichertes Senden über ein virtuelles privates Netzwerk ist;
- das Senden der zweiten Daten (12) durch das mobile Endgerät (T) an die elektronische Steuereinheit (ECU) ein abgesichertes Senden über ein virtuelles privates Netzwerk ist.

6. Verfahren (100) nach einem der vorhergehenden Ansprüche, **dadurch gekennzeichnet, dass** der erste, zweite, dritte, vierte, fünfte, sechste und siebte Schritt (110, 120, 130, 140, 150, 160, 170) während der Ausführung des Befehls bis zur vollständigen Ausführung des Befehls wiederholt werden.

7. Verfahren (100) nach einem der vorhergehenden Ansprüche, **dadurch gekennzeichnet, dass** der Schlüssel (K11) der ersten Daten (11) von der elektronischen Steuereinheit (ECU) beim ersten Schritt (110) erzeugt wird.

8. Verfahren (100) nach einem der Ansprüche 1 bis 6, **dadurch gekennzeichnet, dass** der Schlüssel (K11) der ersten Daten (11) vor dem Ausführen des ersten Schritts (110) in einem Speicher der elektronischen Steuereinheit (ECU) gespeichert wird.

9. Verfahren (100) nach einem der vorhergehenden Ansprüche, **dadurch gekennzeichnet, dass**:
- der Bildschirm (E) ein berührungsempfindlicher Bildschirm ist;
- der Test zur Authentifizierung darin besteht, eine auf dem Bildschirm (E) angezeigte geometrische Form nachzuzeichnen;
- die Ausführung des Tests zur Authentifizierung durch Nachzeichnen der geometrischen Form durch den Benutzer mit seinem Finger oder einem Eingabestift auf dem berührungsempfindlichen Bildschirm erfolgt.

## Claims

1. Method (100) for securing a command to be applied to a motor vehicle (V), for moving between an initial position and a final position, which method comprises:
- a first step (110) of generation, by an electronic control unit (ECU) of the motor vehicle (V), of first data (11);
- a second step (120) of transmission, by the electronic control unit (ECU), of the first data (11) to a mobile terminal (T) comprising a screen (E);
- a third step (130) of displaying on the screen of the mobile terminal (T), a test of authentication of a human user (U) which itself contains the response or the solution, provoked by the first data (11);
- a fourth step (140) of carrying out the authentication test by the human user (U) in order to obtain second data (12);
- a fifth step (150) of transmission, by the mobile terminal (T), of the second data (12) to the electronic control unit (ECU);
- a sixth the step (160) of comparison, by the electronic control unit (ECU), of said second data (12) with a key (K11) of the first data;
- if the second data (12) are validated by the key (K11) of the first data, a seventh step (170) of activation, by the electronic control unit (ECU), of the motor vehicle (V) for the performance of at least a part of the command.

2. Method (100) according to Claim 1, **characterized in that** it comprises a preliminary step (101) of transmission, by the mobile terminal (T), of a request (10-1) relating to the command to the electronic control unit (ECU) of the motor vehicle (V) .

3. Method (100) according to Claim 1, **characterized in that** it comprises an alternative preliminary step (102) of transmission, by an identifier (Id) of the vehicle, of a request (10-2) relating to the command to the electronic control unit (ECU) of the motor vehicle (V).

4. Method (100) according to any one of the preceding claims, **characterized in that** it comprises a preliminary step of performance of an action by the human user (U) on the vehicle (V).

5. Method (100) according to any one of the preceding claims, **characterized in that**:
- the transmission, by the electronic control unit (ECU), of the first data (11) to the mobile terminal (T) is a secure transmission via a virtual private network;
- the transmission, by the mobile terminal (T), of the second data (12) to the electronic control unit (ECU) is a secure transmission via the virtual private network.

6. Method (100) according to any one of the preceding claims, **characterized in that** the first, second, third, fourth, fifth, sixth and seventh steps (110, 120, 130, 140, 150, 160, 170) are repeated during the performance of the command until the complete performance of the command.

7. Method (100) according to any one of the preceding claims, **characterized in that** the key (K11) of the first data (11) is generated by the electronic control unit (ECU) during the first step (110).

8. Method (100) according to any one of Claims 1 to 6, **characterized in that** the key (K11) of the first data (11) is stored in a memory of the electronic control unit (ECU) prior to the performance of the first step (110).

9. Method (100) according to any one of the preceding claims, **characterized in that**:
- the screen (E) is a touchscreen;
- the authentication test consists in reproducing the trace of a geometrical form displayed on the screen (E);
- the authentication test is carried out by reproduction of the trace of said geometrical form by the user with his or her finger or a stylus on the touchscreen.
